(19) Europäisches Patentamt
European Patent Office
Office européen des brevets

(11) **EP 3 702 289 B1**

(12) **FASCICULE DE BREVET EUROPEEN**

(45) Date de publication et mention
de la délivrance du brevet:
**24.04.2024 Bulletin 2024/17**

(21) Numéro de dépôt: **20159063.5**

(22) Date de dépôt: **24.02.2020**

(51) Classification Internationale des Brevets (IPC):
***B64G 1/32*** *(2006.01)* ***B64G 1/28*** *(2006.01)*

(52) Classification Coopérative des Brevets (CPC):
**B64G 1/32;** B64G 1/283; B64G 1/285; B64G 1/36;
B64G 1/366

(54) **PROCÉDÉ DE CONTRÔLE DE L ATTITUDE D'UN SATELLITE EN ORBITE BASSE**

KONTROLLVERFAHREN DER ORIENTIERUNG EINES SATELLITEN IN NIEDRIGER
UMLAUFBAHN

METHOD FOR CONTROLLING THE ATTITUDE OF A SATELLITE IN LOW ORBIT

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **01.03.2019 FR 1902163**

(43) Date de publication de la demande:
**02.09.2020 Bulletin 2020/36**

(73) Titulaire: **Centre National d'Etudes Spatiales
75039 Paris Cedex 01 (FR)**

(72) Inventeur: **VIAUD, Frédérick
31500 TOULOUSE (FR)**

(74) Mandataire: **Germain Maureau
12, rue Boileau
69006 Lyon (FR)**

(56) Documents cités:
**EP-A1- 0 493 143 EP-A1- 0 778 201
WO-A1-2016/051113 CN-B- 106 542 120
FR-A1- 2 809 502**

**Description**

**Domaine de l'invention**

La présente invention se rapporte au domaine d'attitude de satellites en orbite terrestre, et concerne plus particulièrement le contrôle d'attitude de satellites en orbite basse.

**Art antérieur**

De manière connue, le document FR 2 809 502 décrit des procédés de contrôle d'attitude d'un satellite place sur une orbite suffisamment basse pour que l'intensité du champ magnétique terrestre autorise une mesure d'attitude à l'aide d'un magnétomètre à trois axes.

Ledit document FR 2 809 502 décrit plus spécifiquement un procédé visant à réaliser de façon autonome au moins la transition entre des conditions dynamiques initiales quelconques, y compris avec de grands écarts angulaires initiaux et de grandes dynamiques, et un mode opérationnel par réduction des vitesses initiales, acquisition de l'attitude nominale.

Le niveau des performances dépend d'un grand nombre de facteurs tels que :

- conditions initiales et moments d'inertie du satellite ;
- capacité des actionneurs ;
- capacité des magnéto-coupleurs et moment cinétique de la roue ;
- précision de mesure du magnétomètre ;
- perturbations magnétiques internes ;
- précision du modèle magnétique mémorisé à bord ;
- précision de la connaissance de la position du satellite en repère Terre - environnement ;
- couples perturbateurs (aérodynamique, gradient de gravité, magnétique, etc.) ;
- inclinaison de l'orbite ; et

Toutefois, ces solutions ne donnent pas une entière satisfaction.

En effet, un premier inconvénient est qu'avec un tel procédé, il est uniquement possible de suivre une consigne de pointage géocentrique.

Un second inconvénient est la vitesse à laquelle la transition entre des conditions dynamiques initiales quelconques et un mode opérationnel est réalisée.

Le document EP0493143 divulgue un dispositif de contrôle d'attitude d'un satellite stabilisé selon trois axes sur une orbite terrestre, et comporte, entre autre un ensemble de détection d'attitude en roulis, lacet et tangage.

La présente invention a pour but de résoudre tout ou partie des inconvénients mentionnés ci-dessus, et en particulier, de permettre de suivre n'importe quel type de guidage en attitude et notamment des guidages demandant des rotations autour de tous les axes d'un satellite.

**Exposé de l'invention**

A cet effet, la présente invention concerne un procédé de contrôle de l'attitude d'un satellite placé en orbite basse, comprenant des étapes de :

génération d'un moment magnétique ;
génération de trois moments cinétiques comprenant un premier moment cinétique généré en fonction d'un profil de guidage et un deuxième moment cinétique orienté selon une normale à l'orbite et présentant une norme constante ;
mesure de la position angulaire du satellite par rapport à la terre en mesurant le champ magnétique environnant et en comparant le champ magnétique environnant mesuré avec un modèle de champ magnétique ; et
contrôle des moments cinétiques et du moment magnétique afin de modifier la position angulaire du satellite en fonction de la position angulaire mesurée et du profil de guidage.

Au sens de la présente invention, une orbite basse est une orbite inférieure ou égale à deux mille kilomètres d'altitude.

Selon un mode de réalisation, les au moins trois moments cinétiques sont créés à l'aide d'au moins trois roues de réaction. En effet, une roue de réaction permet de créer un moment cinétique.

Une telle disposition, et plus spécifiquement la réalisation d'une étape de génération d'au moins trois moments cinétiques, permet de contrôler l'attitude d'un satellite de manière agile.

Au sens de la présente invention et selon un mode de réalisation, contrôler l'attitude d'un satellite de manière agile signifie contrôler l'attitude d'un satellite rapidement. En particulier, une telle disposition permet de contrôler l'attitude d'un satellite à au moins 0,5° par seconde et par axe.

Au sens de la présente invention et selon un mode de réalisation, contrôler l'attitude d'un satellite de manière agile signifie contrôler l'attitude d'un satellite à au moins 1° par seconde et par axe.

Une telle disposition, et plus spécifiquement la réalisation d'une étape de génération d'au moins trois moments cinétiques, permet un bon contrôle de l'attitude d'un satellite. En effet, le champ magnétique terrestre diminue avec la distance, il est donc plus difficile d'obtenir un couple magnétique suffisant pour contrôler l'attitude d'un satellite à une haute altitude.

Selon un mode de réalisation, le moment magnétique est créé à l'aide d'au moins trois magnéto coupleurs. En effet, un magnéto coupleurs permet de créer un moment magnétique.

Selon un mode de réalisation, l'étape de génération d'un moment magnétique consiste à créer trois sous moments magnétiques sensiblement orthogonaux les uns avec les autres.

Une telle disposition, et plus spécifiquement la réalisation d'une étape de génération d'un moment magnétique, permet de contrôler l'attitude d'un satellite de manière précise.

Selon un mode de réalisation, l'étape de génération d'au moins trois moments cinétiques consiste à créer trois moments cinétiques sensiblement orthogonaux les uns avec les autres.

Au sens de la présente invention, sensiblement orthogonal signifie « orthogonal » ou « orthogonal à 5° près ».

Une telle disposition permet de contrôler l'attitude d'un satellite de manière agile et selon trois axes.

Selon un mode de réalisation, la mesure du champ magnétique environnant est réalisée par un magnétomètre.

Selon un mode de réalisation, le magnétomètre est un magnétomètre trois axes.

Une telle disposition permet d'obtenir une mesure d'une position angulaire précise.

Une telle disposition permet d'obtenir une mesure d'une position angulaire économique en énergie.

Une telle disposition permet d'obtenir une mesure d'une position angulaire économique en place.

Une telle disposition permet d'obtenir une mesure d'une position angulaire économique en poids.

Selon un mode de réalisation, l'étape de génération d'un moment magnétique est réalisée suivant un profil de guidage.

Selon un mode de réalisation, le profil de guidage est un profil préenregistré.

Selon un mode de réalisation, le profil de guidage est un profil émis à distance par une unité de guidage.

Une telle disposition permet de modifier l'attitude d'un satellite avec précision.

Selon un mode de réalisation, l'étape de génération d'au moins trois moments cinétiques est réalisée suivant un profil de guidage.

Une telle disposition permet de modifier l'attitude d'un satellite avec agilité.

Selon un mode de réalisation, l'étape de génération d'au moins trois moments cinétiques comprend une sous étape de génération d'un premier sous moment cinétique réparti selon un à trois axes. Ledit premier sous moment cinétique est généré en fonction du profil de guidage. Une telle configuration permet d'obtenir un procédé de contrôle de l'attitude agile.

Selon un mode de réalisation, l'étape de génération d'au moins trois moments cinétiques comprend une sous étape de génération d'un deuxième sous moment cinétique réparti selon un à trois axes. Ledit deuxième sous moment cinétique est de norme constante et orienté selon la normale à l'orbite. Pour les orbites polaires, la normale à l'orbite correspond sensiblement à la normale au champ magnétique. Le deuxième sous moment cinétique orienté selon la normale à l'orbite permet de compenser l'incapacité du moment magnétique à contrôler l'attitude du satellite dans le plan de l'orbite. Une telle disposition permet de limiter l'impact du couple perturbateur dans ledit plan de l'orbite.

Selon un mode de réalisation, l'étape de contrôle comprend une étape de modification des moments cinétiques afin de modifier la position angulaire.

Une telle disposition permet de modifier l'attitude d'un satellite avec agilité.

Selon un mode de réalisation, l'étape de contrôle comprend une étape de modification du moment magnétique afin de modifier la position angulaire.

Une telle disposition permet de modifier avec précision l'attitude d'un satellite.

Selon un mode de réalisation, l'étape de modification de la position angulaire est réalisée en fonction du profil de guidage.

Une telle disposition permet d'obtenir un satellite ayant une attitude correspondant au profil de guidage.

L'invention concerne également un dispositif de contrôle de l'attitude d'un satellite en orbite basse comprenant :

- une unité de génération de moments magnétiques configurée pour générer un moment magnétique;
- une unité de génération de moments cinétiques configurée pour générer au moins trois moments cinétiques;
- une unité de mesure de champ magnétique environnant ;
- une unité de contrôle configurée pour contrôler l'unité de génération de moments cinétiques, l'unité de génération de moments magnétiques et l'unité de mesure de champ magnétique environnant.

Selon un mode de réalisation, l'unité de contrôle configurée pour contrôler le courant à fournir à l'unité de génération de moments cinétiques et à l'unité de génération de moments magnétiques.

Une telle disposition, et plus spécifiquement un dispositif de contrôle comprenant une unité de génération de moments cinétiques permet un bon contrôle de l'attitude d'un satellite. En effet, le champ magnétique terrestre diminue avec la distance, il est donc plus difficile d'obtenir un couple magnétique suffisant pour contrôler l'attitude d'un satellite à une haute altitude.

Une telle disposition, et plus spécifiquement un dispositif de contrôle comprenant une unité de génération de moments magnétiques permet de contrôler l'attitude d'un satellite de manière précise.

Selon un mode de réalisation, l'unité de mesure de champ magnétique environnant est un magnétomètre à trois axes.

Une telle disposition permet une mesure de champ magnétique environnant précise sur trois axes.

Une telle disposition permet la mesure du champ magnétique environnant à faible coût énergétique, à faible encombrement et à faible poids.

Selon un mode de réalisation, l'unité de génération de moments cinétiques comprend au moins trois roues cinétiques.

Une telle disposition permet la génération d'un moment cinétique à faible coût énergétique, encombrement et poids.

Selon un mode de réalisation, l'unité de génération de moments magnétiques comprend au moins trois magnéto coupleurs.

Une telle disposition permet la génération d'un moment magnétique à faible coût énergétique, encombrement et poids.

Selon un mode de réalisation, ledit dispositif comprend une unité de communication configurée pour recevoir un profil de guidage.

Une telle configuration permet de modifier l'attitude d'un satellite.

Selon un mode de réalisation, l'unité de contrôle est configurée pour contrôler l'attitude d'un satellite à l'aide de l'unité de génération de moments cinétiques et de l'unité de génération de moments magnétiques.

Une telle disposition permet de contrôler de l'attitude d'un satellite de manière agile et précise.

Selon un mode de réalisation, l'unité de contrôle est configurée pour contrôler l'attitude d'un satellite en fonction du profil de guidage et d'une mesure de champ magnétique environnant obtenue par l'unité de mesure de champ magnétique environnant.

Une telle disposition permet de modifier l'attitude d'un satellite.

Les différents aspects définis ci-dessus non incompatibles peuvent être combinés.

## Brève description des figures

L'invention sera encore mieux comprise à l'aide de la description détaillée qui est exposée ci-dessous en regard des dessins annexés dans lesquels :

La figure 1 représente un schéma d'un procédé de contrôle de l'attitude d'un satellite conformément à la présente invention ; et
La figure 2 représente un exemple de mise en oeuvre du procédé de contrôle de l'attitude d'un satellite conformément à la présente invention.
La figure 3 représente un procédé de contrôle de l'attitude d'un satellite conformément à la présente invention.

## Description en référence aux figures

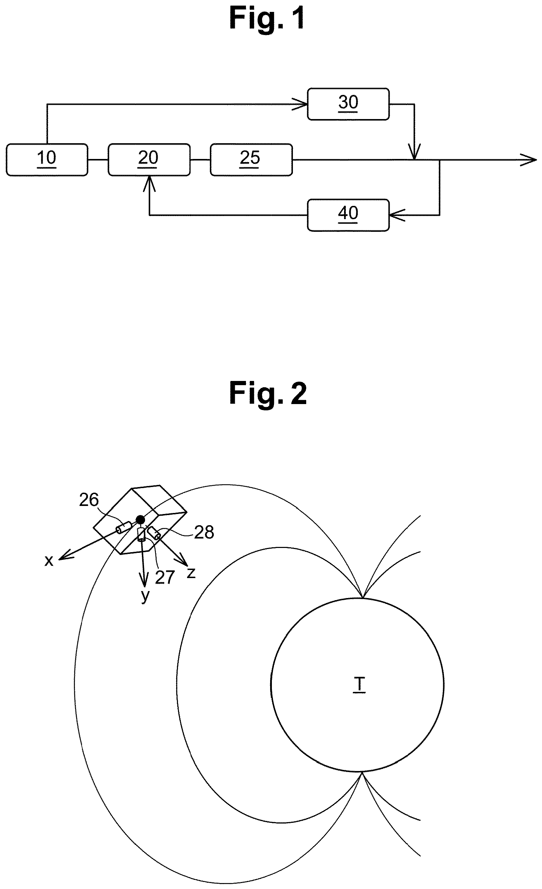

Comme illustré sur la figure 1, un mode de réalisation du procédé de contrôle de l'attitude d'un satellite placé en orbite basse comprend une étape de contrôle du courant à fournir à trois roues de réaction 10 ainsi qu'une étape de contrôle du courant à fournir à trois magnéto coupleurs 20.

Au sens de la présente invention, une orbite basse est une orbite inférieure ou égale à deux mille kilomètres d'altitude.

L'étape de contrôle du courant à fournir à chacune des trois roues de réaction 10 est réalisée en fonction de l'attitude désirée.

Le procédé comprend également une étape de génération d'un moment magnétique 25 et une étape de génération d'au moins trois moments cinétiques 30. Les étapes 25 et 30 dépendent des étapes de contrôle 10 et 20 précédemment réalisées.

Une telle disposition, et plus spécifiquement la réalisation d'une étape de génération d'au moins trois moments cinétiques 30, permet de contrôler l'attitude d'un satellite de manière agile.

Selon un mode de réalisation, l'étape de génération d'au moins trois moments cinétiques 30 est réalisée en permanence.

Au sens de la présente invention, contrôler l'attitude d'un satellite de manière agile signifie contrôler l'attitude d'un satellite rapidement. En particulier, une telle disposition permet de contrôler l'attitude d'un satellite à au moins 0,5° par seconde et par axe.

Une telle disposition, et plus spécifiquement la réalisation d'une étape de génération d'au moins trois moments cinétiques 30, permet un bon contrôle de l'attitude d'un satellite. En effet, l'utilisation seule des magnéto-coupleurs ne permet pas de générer un couple de contrôle autour de tous les axes car il n'est pas possible de générer un couple magnétique autour de la direction du champ magnétique environnant. La génération d'un moment cinétique pouvant s'appliquer simultanément autour de plusieurs axes du satellite permet de compenser ce manque de contrôlabilité.

Selon un mode de réalisation, l'étape de génération d'au moins trois moments cinétiques 30 consiste à créer trois moments cinétiques sensiblement orthogonaux les uns avec les autres.

Au sens de la présente invention, sensiblement orthogonal signifie « orthogonal » ou « orthogonal à 5° près ».

Une telle disposition permet de contrôler l'attitude d'un satellite de manière agile et selon trois axes.

Selon un mode de réalisation, l'étape de génération d'au moins trois moments cinétiques 30 est réalisée suivant un profil de guidage.

Selon un mode de réalisation, l'étape de génération d'au moins trois moments cinétiques 30 comprend une sous étape de génération d'un premier sous moment cinétique réparti selon un à trois axes. Ledit premier sous moment cinétique est généré en fonction du profil de guidage. Une telle configuration permet d'obtenir un procédé de contrôle de l'attitude agile.

Selon un mode de réalisation, l'étape de génération d'au moins trois moments cinétiques 30 comprend une sous étape de génération d'un deuxième sous moment cinétique réparti selon un à trois axes. Ledit deuxième sous moment cinétique est de norme constante et orienté selon la normale à l'orbite. Pour les orbites polaires, la normale à l'orbite correspond sensiblement à la normale au champ magnétique. Le deuxième sous moment cinétique orienté selon la normale à l'orbite permet de compenser l'incapacité du moment magnétique à contrôler l'attitude du satellite dans le plan de l'orbite. Une telle disposition permet de limiter l'impact du couple perturbateur dans ledit plan de l'orbite.

Au sens de la présente invention, un profil de guidage est une consigne d'attitude à suivre par le satellite et comprend une consigne de pointage et une consigne de vitesse de rotation.

Au sens de la présente invention, un profil de guidage est un objectif de pointage.

Selon un mode de réalisation, le profil de guidage est un profil préenregistré.

Selon un mode de réalisation, le profil de guidage est un profil calculé par une unité de contrôle présente à bord du satellite dont l'attitude est contrôlée.

Selon un mode de réalisation, le profil de guidage est un profil émis à distance par une unité de guidage.

Une telle disposition permet de modifier l'attitude d'un satellite avec précision.

Une telle disposition permet de modifier l'attitude d'un satellite avec agilité.

Selon un mode de réalisation, le moment magnétique est créé à l'aide d'au moins trois magnéto coupleurs. En effet, un magnéto coupleurs permet de créer un sous moment magnétique.

Selon un mode de réalisation, l'étape de génération d'un moment magnétique consiste à créer trois sous moments magnétiques sensiblement orthogonaux les uns avec les autres.

Une telle disposition, et plus spécifiquement la réalisation d'une étape de génération d'un moment magnétique 25, permet de contrôler l'attitude d'un satellite de manière précise. En effet, la combinaison d'un moment magnétique avec trois moments cinétique permet à la fois un changement d'attitude agile mais également précis.

Au sens de la présente invention, de manière précise signifie « précis à 5° près par rapport à la consigne ».

Selon un mode de réalisation, l'étape de génération d'un moment magnétique 25 est réalisée suivant un profil de guidage.

La combinaison de moments cinétiques avec un moment magnétique permet de suivre n'importe quel type de guidage en attitude et notamment des guidages demandant des rotations autour de tous les axes d'un satellite.

Le procédé comprend ensuite une étape de mesure 40 du champ magnétique environnant et enfin une étape de contrôle du moment magnétique afin de modifier la position angulaire du satellite en fonction de la position angulaire mesurée.

Selon un mode de réalisation, l'étape de mesure 40 de la position angulaire comprend une étape de mesure du champ magnétique environnant et une étape de comparaison du champ magnétique environnant mesuré avec un modèle de champ magnétique. Une telle disposition permet une économie de puissance de calcul.

Selon un mode de réalisation, l'étape de mesure 40 du champ magnétique environnant comprend une étape de mesure du champ magnétique environnant et une étape de mesure de la direction du champ magnétique environnant.

Selon un mode de réalisation, la mesure du champ magnétique environnant est réalisée par un magnétomètre.

Une telle disposition permet une économie de la puissance de calcul.

Selon un mode de réalisation, le magnétomètre est un magnétomètre trois axes.

Une telle disposition permet d'obtenir une mesure d'une position angulaire précise.

Une telle disposition permet d'obtenir une mesure d'une position angulaire économique en énergie.

Une telle disposition permet d'obtenir une mesure d'une position angulaire économique en place.

Une telle disposition permet d'obtenir une mesure d'une position angulaire économique en poids.

L'étape de contrôle du courant à fournir à trois magnéto coupleurs 20 est de nouveau réalisée en fonction de l'attitude désirée mais également en fonction de la mesure de la position angulaire du satellite par rapport à la terre. Une telle disposition permet de contrôler l'attitude avec une bonne précision.

Selon un mode de réalisation, l'étape de contrôle du courant à fournir au trois magnéto coupleurs 20 est une étape de modification de consigne permettant d'adapter le moment magnétique à l'attitude désirée.

Selon un mode de réalisation, l'étape de contrôle du courant à fournir à trois magnéto coupleurs 20 est de nouveau réalisée en fonction de l'attitude désirée mais également en fonction de la mesure du champ magnétique environnant et du profil de guidage. Une telle disposition permet de contrôler l'attitude avec une bonne précision. Une telle disposition permet d'obtenir un satellite ayant une attitude correspondant au profil de guidage.

Selon un mode de réalisation non représenté, l'étape de contrôle du courant à fournir à trois magnéto coupleurs 20 comprend une étape de modification des moments cinétiques afin de modifier la position angulaire du satellite.

Une telle disposition permet de modifier l'attitude d'un satellite avec agilité.

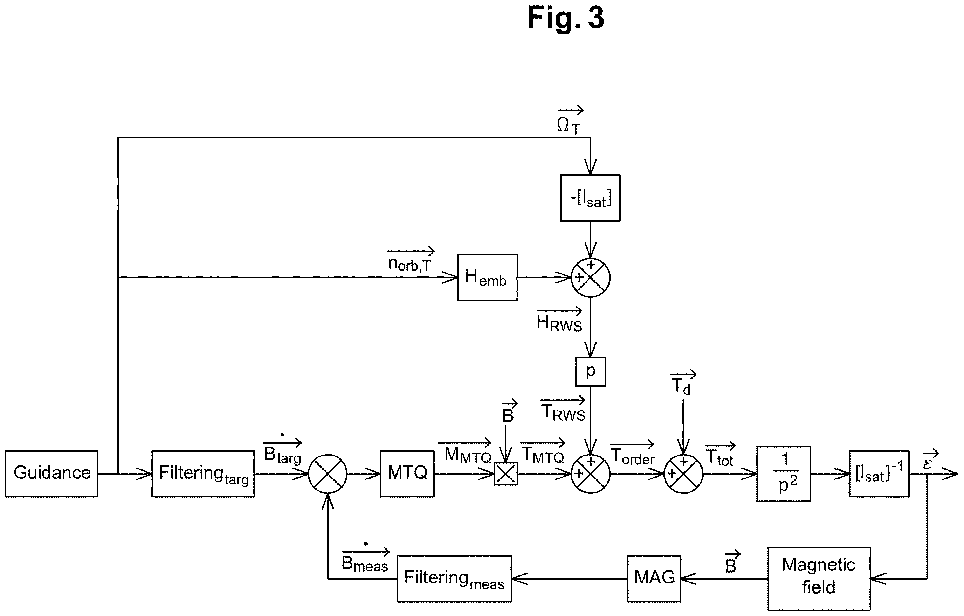

Un mode de réalisation préféré de l'invention est représenté en figure 3 avec :

- $B_{targ}$ qui représente la mesure angulaire de consigne ;
- $B_{meas}$ qui représente le champ magnétique environnant mesuré ;
- MTO qui représente la génération d'un moment magnétique ;
- $M_{MTQ}$ qui représente le moment magnétique généré, $M_{mtq}$ =

$$\text{Mmtq} = \frac{1}{\|B_{targ}\|^2}\left(K_p . B_{targ} + K_d . \left(\dot{B}_{targ} - \dot{B}_{meas}\right)\right)$$

avec $K_p$ et $K_d$ qui sont des gains scalaires ;

- B qui représente le champ magnétique environnant ;
- $T_{MTQ}$ qui représente le couple magnétique résultant du produit croisé de $M_{MTQ}$ avec B appliqué au satellite ;
- $\Omega_T$ qui représente la vitesse de consigne à appliquer aux roues cinétiques ;
- $I_{sat}$ qui représente l'inertie du satellite ;
- $n_{orb,T}$ qui représente la normale à l'orbite de consigne ;
- $H_{emb}$ qui représente le moment cinétique embarqué ;
- $H_{RWS}$ qui représente le moment cinétique total commandé aux roues cinétiques ;
- $T_{rws}$ qui représente le couple cinétique appliqué au satellite ;
- p qui représente la dérivée, la dérivée du moment cinétique $H_{RWS}$ est égale au couple cinétique $T_{rws}$ ;
- $T_{order}$ qui représente le couple total appliqué volontairement au satellite ;
- $T_d$ qui représente le couple perturbateur appliqué au satellite ;
- $T_{tot}$ qui représente le couple total appliqué au satellite ; et
- $\varepsilon$ qui représente l'influence angulaire totale appliquée au satellite.

La figure 3 décrit également :

- Navigation qui représente la position du satellite dans l'espace ;
- Guidance qui représente le profil de guidage ;
- $Filtering_{targ}$ qui représente un modèle permettant de déterminer $B_{targ}$.
- Magnetic field et MAG qui représentent la mesure du champ magnétique environnant ; et
- $Filtering_{meas}$ qui représente un modèle permettant cette fois-ci de déterminer $B_{meas}$.

L'invention concerne également un dispositif de contrôle de l'attitude d'un satellite en orbite basse comprenant :

une unité de génération de moments magnétiques configurée pour générer un moment magnétique;
une unité de génération de moments cinétiques configurée pour générer au moins trois moments cinétiques;
une unité de mesure de champ magnétique environnant;
une unité de contrôle configurée pour contrôler l'unité de génération de moments cinétiques, l'unité de génération de moments magnétiques et l'unité de mesure de champ magnétique environnant.

Selon un mode de réalisation, un tel dispositif permet de mettre en oeuvre le procédé précédemment décrit. Les avantages du procédé s'appliquent donc au dispositif.

Une telle disposition, et plus spécifiquement un dispositif de contrôle comprenant une unité de génération de moments magnétiques permet de contrôler l'attitude d'un satellite de manière précise.

Selon un mode de réalisation, l'unité de mesure de champ magnétique environnant est un magnétomètre à trois axes.

Une telle disposition permet une mesure du champ magnétique environnant précise sur trois axes.

Une telle disposition permet la mesure d'une position angulaire à faible coût énergétique, à faible encombrement et à faible poids.

Selon un mode de réalisation, l'unité de génération de moments cinétiques comprend au moins trois roues cinétiques.

Une telle disposition permet la génération d'un moment cinétique à faible coût énergétique, encombrement et poids.

Selon un mode de réalisation, l'unité de génération de moments magnétiques comprend au moins trois magnéto coupleurs.

Une telle disposition permet la génération d'un moment magnétique à faible coût énergétique, encombrement et poids.

Selon un mode de réalisation, le dispositif comprend une unité de communication configurée pour recevoir un profil de guidage.

Une telle configuration permet de modifier l'attitude d'un satellite.

Selon un mode de réalisation, l'unité de contrôle est configurée pour contrôler l'attitude d'un satellite à l'aide de l'unité de génération de moments cinétiques et de l'unité de génération de moments magnétiques.

Une telle disposition permet de contrôler l'attitude d'un satellite de manière agile et précise.

Selon un mode de réalisation, l'unité de contrôle est configurée pour contrôler l'attitude d'un satellite en fonction du profil de guidage et d'une mesure de position angulaire obtenu par l'unité de mesure de positions angulaires.

Une telle disposition permet de modifier l'attitude d'un satellite.

A titre d'exemple, on considérera le cas d'une orbite polaire basse, illustré en figure 2. En première approximation, les lignes de force du champ géomagnétique se trouvent alors dans le plan de l'orbite. On peut définir un axe de roulis x, un axe de tangage y et un axe de lacet z constituant un trièdre orthonormé lié au satellite, ainsi que des angles de roulis $\varphi$, de tangage $\theta$ et de lacet $\psi$, définis respectivement comme les erreurs d'orientation autour de la direction du vecteur vitesse instantanée, autour de la direction normale au plan orbital et autour de la direction du satellite pointant vers la Terre.

Le contrôle d'attitude se fait par mise en oeuvre des trois magnéto coupleurs 26, 27 et 28 qui sont par exemple respectivement disposés le long des axes de roulis, de tangage et de lacet. Les courants à fournir aux magnéto coupleurs sont calculés par l'unité de contrôle. L'unité de contrôle contrôle également la vitesse des trois roues de réactions qui sont disposées respectivement suivant le plan des axes x, y et z.

L'attitude n'est pas contrôlable autour de la direction magnétique par les magnéto coupleurs car le couple magnétique est égal au produit vectoriel entre le moment magnétique créé et le champ magnétique environnant.

La direction magnétique est donc couplée par trois moments cinétiques. L'introduction des moments cinétiques complète l'action des magnéto coupleurs et permet de modifier l'attitude suivant les axes x, y et z de manière agile.

Les trois axes sont ainsi stabilisés.

Bien entendu, l'invention n'est pas limitée aux modes de réalisation représentés et décrits ci-avant, mais en couvre au contraire toutes les variantes dans les limites spécifiées par les revendications.

## Revendications

1. Procédé de contrôle de l'attitude d'un satellite placé en orbite basse comprenant des étapes de :

  génération d'un moment magnétique (25) ;
  génération de trois moments cinétiques (30) comprenant un premier moment cinétique généré en fonction d'un profil de guidage et un deuxième moment cinétique orienté selon une normale à l'orbite et présentant une norme constante ;
  mesure (40) de la position angulaire du satellite par rapport à la terre en mesurant un champ magnétique environnant et en comparant le champ magnétique environnant mesuré à un modèle de champ magnétique ; et
  contrôle des moments cinétiques et du moment magnétique afin de modifier la position angulaire du satellite en fonction de la position angulaire mesurée et du profil de guidage.

**2.** Procédé de contrôle selon la revendication 1, dans lequel les trois moments cinétiques (30) sont sensiblement orthogonaux les uns avec les autres.

**3.** Procédé de contrôle selon la revendication 1 ou 2, dans lequel la génération d'un moment magnétique comprend la génération de trois sous moments magnétiques sensiblement orthogonaux les uns avec les autres.

**4.** Procédé de contrôle selon la revendication 1 à 3, dans lequel le profil de guidage est préenregistré, ou bien est calculé par une unité de contrôle à bord du satellite, ou bien est émis à distance par une unité de guidage.

**5.** Procédé de contrôle selon l'une quelconque des revendications 1 à 4, dans lequel le profil de guidage comprend une consigne de pointage et/ou une consigne de vitesse de rotation.

**6.** Procédé de contrôle selon l'une quelconque des revendications 1 à 5, dans la génération d'un moment magnétique est réalisée suivant le profil de guidage.

**7.** Dispositif de contrôle de l'attitude d'un satellite en orbite basse permettant de mettre en oeuvre le procédé selon l'une des revendications 1 à 6, dans lequel le dispositif comprend :

• une unité de génération de moments magnétiques configurée pour générer un moment magnétique;
• une unité de génération de moments cinétiques configurée pour générer au moins trois moments cinétiques;
• une unité de mesure de champ magnétique environnant ;
• une unité de contrôle configurée pour contrôler l'unité de génération de moments cinétiques, l'unité de génération de moments magnétiques et l'unité de mesure de champ magnétique environnant.

**8.** Dispositif de contrôle selon la revendication 7, dans lequel l'unité de contrôle est configurée pour contrôler le courant à fournir à l'unité de génération de moments cinétiques et pour contrôler le courant à fournir à l'unité de génération de moments magnétiques.

**9.** Dispositif de contrôle selon la revendication 7 ou 8, dans lequel l'unité de mesure de champ magnétique environnant est un magnétomètre à trois axes.

**10.** Dispositif de contrôle selon l'une quelconque des revendications 7 à 9, dans lequel l'unité de génération de moments cinétiques comprend au moins trois roues cinétiques.

**11.** Dispositif de contrôle selon l'une quelconque des revendications 7 à 10, dans lequel l'unité de génération de moments magnétiques comprend au moins trois magnéto coupleurs (26, 27, 28).

**12.** Dispositif de contrôle selon l'une quelconque des revendications 7 à 11, comprenant une unité de communication configurée pour recevoir le profil de guidage.

**13.** Dispositif de contrôle selon l'une quelconque des revendications 7 à 11, dans lequel l'unité de contrôle est configurée pour contrôler l'attitude d'un satellite à l'aide de l'unité de génération de moments cinétiques et de l'unité de génération de moments magnétiques.

**Patentansprüche**

**1.** Verfahren zum Steuern der Lage eines Satelliten, der in einer niedrigen Umlaufbahn platziert ist, umfassend die folgenden Schritte:

Erzeugen eines magnetischen Moments (25);
Erzeugen drei Drehimpulsen (30), die einen ersten Drehimpuls, der in Abhängigkeit von einem Führungsprofil erzeugt wird, und einen zweiten Drehimpuls umfasst, der entlang einer Normalen zur Umlaufbahn ausgerichtet ist und eine konstante Norm aufweist;
Messen (40) der Winkelposition des Satelliten im Verhältnis zur Erde durch Messen eines umgebenden Magnetfelds und Vergleichen des gemessenen umgebenden Magnetfelds mit einem Magnetfeldmodell; und
Steuern der Drehimpulse und des magnetischen Moments, um die Winkelposition des Satelliten in Abhängigkeit von der gemessenen Winkelposition und dem Führungsprofil zu ändern.

**2.** Steuerverfahren nach Anspruch 1, wobei die drei Drehimpulse (30) im Wesentlichen orthogonal zueinander sind.

**3.** Steuerverfahren nach Anspruch 1 oder 2, wobei das Erzeugen eines magnetischen Moments das Erzeugen von drei magnetischen Teilmomenten umfasst, die im Wesentlichen orthogonal zueinander sind.

**4.** Steuerverfahren nach Anspruch 1 bis 3, wobei das Führungsprofil vorab aufgezeichnet bzw. von einer Steuereinheit an Bord des Satelliten berechnet bzw. von einer Führungseinheit aus der Ferne übertragen wird.

**5.** Steuerverfahren nach einem der Ansprüche 1 bis 4, wobei das Führungsprofil einen Ausrichtungssollwert und/oder einen Drehzahlsollwert umfasst.

**6.** Steuerverfahren nach einem der Ansprüche 1 bis 5, wobei das Erzeugen eines magnetischen Moments entsprechend dem Führungsprofil durchgeführt wird.

**7.** Vorrichtung zum Steuern der Lage eines Satelliten in einer niedrigen Umlaufbahn, die das Implementieren des Verfahrens nach einem der Ansprüche 1 bis 6 ermöglicht, wobei die Vorrichtung Folgendes umfasst:

> eine Einheit zum Erzeugen von magnetischen Momenten, die dazu konfiguriert ist, einen magnetischen Moment zu erzeugen;
> eine Einheit zum Erzeugen von Drehimpulsen, die dazu konfiguriert ist, mindestens drei Drehimpulse zu erzeugen;
> eine Messeinheit des umgebenden Magnetfelds;
> eine Steuereinheit, die dazu konfiguriert ist, die Einheit zum Erzeugen von Drehimpulsen, die Einheit zum Erzeugen von magnetischen Momenten und die Messeinheit des umgebenden Magnetfelds zu steuern.

**8.** Steuervorrichtung nach Anspruch 7, wobei die Steuereinheit dazu konfiguriert ist, den der Einheit zum Erzeugen von Drehimpulsen zuzuführenden Strom zu steuern und den der Einheit zum Erzeugen von magnetischen Momenten zuzuführenden Strom zu steuern.

**9.** Steuervorrichtung nach Anspruch 7 oder 8, wobei die Messeinheit des umgebenden Magnetfelds ein dreiachsiges Magnetometer ist.

**10.** Steuervorrichtung nach einem der Ansprüche 7 bis 9, wobei die Einheit zum Erzeugen von Drehimpulsen mindestens drei kinetische Räder umfasst.

**11.** Steuervorrichtung nach einem der Ansprüche 7 bis 10, wobei die Einheit zum Erzeugen von magnetischen Momenten mindestens drei Magnetkoppler (26, 27, 28) umfasst.

**12.** Steuervorrichtung nach einem der Ansprüche 7 bis 11, umfassend eine Kommunikationseinheit, die dazu konfiguriert ist, das Führungsprofil zu empfangen.

**13.** Steuervorrichtung nach einem der Ansprüche 7 bis 11, wobei die Steuereinheit dazu konfiguriert ist, die Lage eines Satelliten mithilfe der Einheit zum Erzeugen von Drehimpulsen und der Einheit zum Erzeugen von magnetischen Momenten zu steuern.

**Claims**

**1.** A method for controlling the attitude of a satellite placed in low orbit comprising steps of:

> generating a magnetic moment (25);
> generating three kinetic moments (30) comprising a first kinetic moment generated as a function of a guidance profile and a second kinetic moment oriented according to a normal to the orbit and presenting a constant norm;
> measuring (40) the angular position of the satellite relative to the earth by measuring a surrounding magnetic field and comparing the measured surrounding magnetic field to a magnetic field model; and
> controlling the kinetic moments and the magnetic moment in order to modify the angular position of the satellite according to the measured angular position and the guidance profile.

2. The control method according to claim 1, wherein the three kinetic moments (30) are substantially orthogonal to each other.

3. The control method according to claim 1 or 2, wherein the generation of a magnetic moment comprises the generation of three magnetic sub-moments substantially orthogonal to each other.

4. The control method according to claim 1 to 3, wherein the guidance profile is pre-recorded, or is calculated by a control unit on board the satellite, or is transmitted remotely by a guidance unit.

5. The control method according to any one of claims 1 to 4, wherein the guidance profile comprises a pointing setpoint and/or a rotation speed setpoint.

6. The control method according to any one of claims 1 to 5, wherein the generation of a magnetic moment is carried out according to the guidance profile.

7. A device for controlling the attitude of a satellite in low orbit making it possible to implement the method according to any of claims 1 to 6, in which the device comprises:

   a unit of generating magnetic moments configured to generate a magnetic moment;
   a unit of generating kinetic moments configured to generate at least three kinetic moments;
   a unit of measuring the surrounding magnetic field;
   a control unit configured to control the kinetic moment generation unit, the magnetic moment generation unit and the surrounding magnetic field measurement unit.

8. The control device according to claim 7, wherein the control unit is configured to control the current to be supplied to the kinetic moment generation unit and to control the current to be supplied to the magnetic moment generation unit.

9. The control device according to claim 7 or 8, wherein the surrounding magnetic field measurement unit is a three-axis magnetometer.

10. The control device according to any one of claims 7 to 9, wherein the kinetic moment generation unit comprises at least three flywheels.

11. The control device according to any one of claims 7 to 10, wherein the magnetic moment generation unit comprises at least three magneto couplers (26, 27, 28).

12. The control device according to any one of claims 7 to 11, comprising a communication unit configured to receive the guidance profile.

13. The control device according to any one of claims 7 to 11, wherein the control unit is configured to control the attitude of a satellite using the kinetic moment generation unit and the magnetic moment generation unit.

# Fig. 1

# Fig. 2

Fig. 3

**RÉFÉRENCES CITÉES DANS LA DESCRIPTION**

**Documents brevets cités dans la description**

- FR 2809502

- EP 0493143 A